# EUROPÄISCHE PATENTSCHRIFT

(11) **EP 1 339 956 B1**
(45) Veröffentlichungstag und Bekanntmachung des Hinweises auf die Patenterteilung: **08.08.2007**
(21) Anmeldenummer: 01997627.3
(22) Anmeldetag: 21.11.2001
(51) Int. Cl.: F01N 3/20, B01D 53/90

(54) **DOSIERVENTIL**
METERING VALVE
SOUPAPE DE DOSAGE

(30) Priorität: 23.11.2000 DE 10058015
(43) Veröffentlichungstag der Anmeldung: 03.09.2003
(73) Patentinhaber: ROBERT BOSCH GMBH, 70442 Stuttgart (DE)
(72) Erfinder: MOELL, Alexander, (DE); HUBER, Sven, 83404 Ainring-Mitterfelden (DE); MAYER, Hanspeter, A-2753 Markt Piesting (AT); MUELLER, Gerhard, 83395 Freilassing (DE); OFFENHUBER, Michael, A-5421 Adnet (AT)
(86) Internationale Anmeldenummer: PCT/DE2001/004406
(87) Internationale Veröffentlichungsnummer: WO 2002/042616

(56) Entgegenhaltungen:
- WO-A-00/21881
- DE-A- 3 803 374
- GB-A- 371 860
- PATENT ABSTRACTS OF JAPAN vol. 2000, no. 06, 22. September 2000 (2000-09-22) & JP 2000 074243 A (HATTA SEISAKUSHO:KK), 14. März 2000 (2000-03-14)
- PATENT ABSTRACTS OF JAPAN vol. 006, no. 050 (M-120), 3. April 1982 (1982-04-03) & JP 56 164287 A (SHINWA KOGYO KK), 17. Dezember 1981 (1981-12-17)
- PATENT ABSTRACTS OF JAPAN vol. 018, no. 227 (M-1597), 25. April 1994 (1994-04-25) & JP 06 017955 A (TOTO LTD), 25. Januar 1994 (1994-01-25)
- PATENT ABSTRACTS OF JAPAN vol. 2000, no. 04, 31. August 2000 (2000-08-31) & JP 2000 027627 A (HINO MOTORS LTD), 25. Januar 2000 (2000-01-25)

## Beschreibung

### Stand der Technik

Die Erfindung geht aus von einer Ventilanordnung nach der Gattung des Anspruchs 1. Aus der deutschen Patentanmeldung mit dem Aktenzeichen 1 00 40 571.1 ist ein Dosierventil zum Dosieren eines Reduktionsmittels bekannt, bei dem das in flüssiger Form vorliegende Reduktionsmittel durch einen Arbeitsraum des Ventils geleitet wird, der ein fest vorgegebenes Volumen aufweist.

Aus der JP 2000074243 A ist bekannt, eine Ventilanordnung mit einer kompressiblen Luftröhre zu versehen. Aus der DE 38 03 374 ist ein elektromagnetisch betätigtes Einspritzventil mit einem ebenen Dichtteller bekannt. Die GB 371 860 offenbart ein Ventil zur Einspritzung von Kraftstoff in einen Verbrennungsraum, wobei der Ventilkörper beweglich gelagert ist, so dass bei Überdrucken am Ventilkörper vorbei Gase den Verbrennungsraum verlassen können.

### Vorteile der Erfindung

Die erfindungsgemäße Ventilanordnung mit den Merkmalen des Anspruchs 1 hat demgegenüber den Vorteil, dass insbesondere für Fahrzeuganwendungen eine bedarfsgerechte Zumessung von Flüssigkeiten erfolgen kann, ohne dass die Anordnung bei einem etwaigen Gefrieren der Flüssigkeit zerstört wird. Die Ventilanordnung ist nach einem Auftauen der Flüssigkeit wieder voll funktionsfähig und kann einen solchen Gefrierzyklus vielfach ertragen. Ventilsitz sowie Dichtungen und etwaig vorhandene Vergußmassen für eine Magnetspule des Ventils bleiben unbeschädigt, und flüssigkeitsführende Leitungen werden nicht verformt. Insbesondere bei Verwendung wäßriger Lösungen erweist sich die erfindungsgemäße Konstruktion als eisdruckbeständige Anordnung, die durch leichten Umbau von Standardventilen, wie beispielsweise von PKW-Benzineinspritzventilen oder Gasdosierventilen erhalten werden kann. Insbesondere für Harnstoff-Dosiersysteme zur Nachbehandlung von Abgasen von Brennkraftmaschinen erweist sich die erfindungsgemäße Anordnung als vorteilhaft. Durch die Verwendung unter Druck nachgebender Elemente wird der Aufbau hoher Druckkräfte vermieden und es können auch Bauteile und Werkstoffe mit geringerer Druckfestigkeit verwendet werden. Eine bewegliche Lagerung des Ventils ermöglicht in vorteilhafter Weise eine Ausgleichsbewegung des Ventils zum Schutz einer sich an den Ausgang des Ventils anschließenden flüssigkeitsführenden Leitung.

Durch die in den abhängigen Ansprüchen aufgeführten Maßnahmen sind vorteilhafte Weiterbildungen und Verbesserungen der im Anspruch 1 angegebenen Ventilanordnung möglich. Besonders vorteilhaft erweist sich das Vorsehen einer gasgefüllten Membrandose, eines elastischen Formrohrteils oder eines elastischen kompressiblen Schlauchs, mittels denen in einfacher Weise bereits bestehende Düsenkonstruktionen, unabhängig davon, ob es sich um der ganzen Länge nach durchströmte Ventilkonstruktionen oder um Anordnungen mit seitlicher Flüssigkeitszufuhr handelt, abgeändert werden können.

Weitere Vorteile ergeben sich aus den weiteren in den abhängigen Ansprüchen und in der Beschreibung genannten Merkmalen.

### Zeichnung

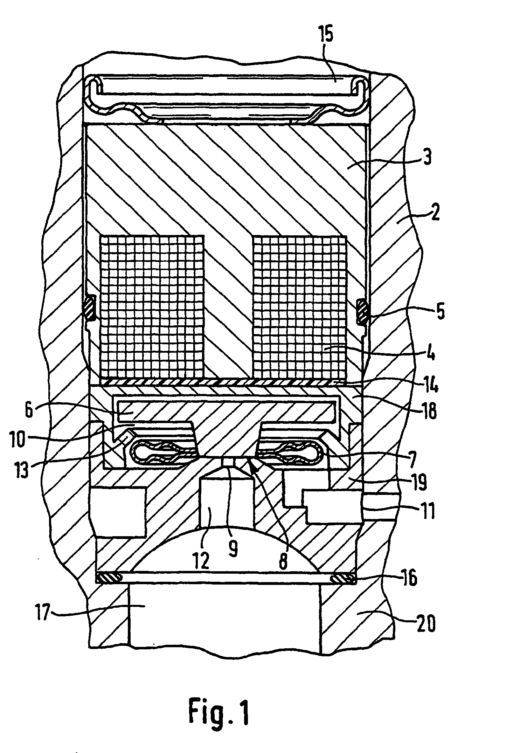

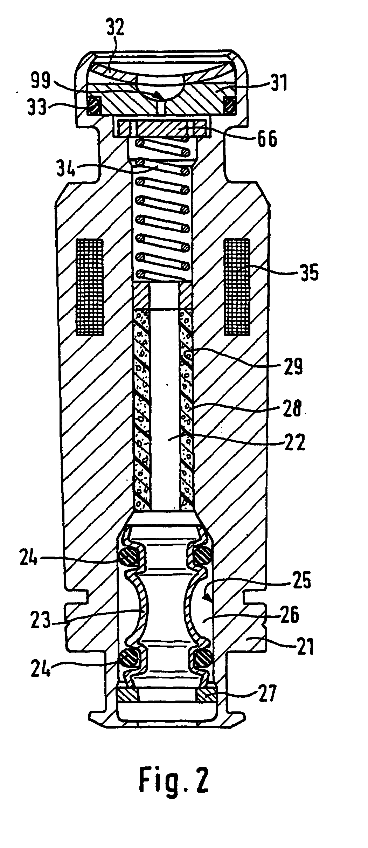

Ausführungsbeispiele der Erfindung sind in der Zeichnung dargestellt und in der nachfolgenden Beschreibung näher erläutert. Es zeigen Figur 1 eine erfindungsgemäße Ventilanordnung mit lateraler Flüssigkeitszufuhr und Figur 2 eine axial durchströmte Ventilanordnung.

### Beschreibung der Ausführungsbeispiele

Figur 1 zeigt eine erfindungsgemäße Ventilanordnung mit einem Ventilkörper (3, 18, 19), der einen Spulenteil 3 mit einer Magnetspule 4, einen einen Arbeitsraum 10 umschließenden Arbeitsraumteil 18 sowie einen Ein-/Auslaßbereich 19 umfaßt. Der Ventilkörper ist in einer Öffnung des Magnetventilhalters 2 eingebracht und mittels einer federnden Klemmscheibe 15 arretiert. Der Ventilkörper sitzt hierbei über dem Elastomerdichtring 16 auf den Wänden 20 der Leitung 17 auf. Ein lateraler Zulauf 11 zum Arbeitsraum des Ventilkörpers ist im Magnetventilhalter 2 integriert. Die Abdichtung zur Leitung 17 erfolgt über den Elastomerdichtring 16, die Abdichtung zum Außenraum des Magnetventilhalters ist durch eine O-Ringdichtung 5 gewährleistet, die ungefähr in Höhe der Magnetspule 4 den Umfang des Spulenteils 3 abdichtend umschließt. Der Zulauf 11 führt in den Arbeitsraum 10, in dem eine Ventilplatte 6 beweglich gelagert ist. Die Ventilplatte kann durch Anlegen eines Stromes an die Magnetspule 4 von der Ablauföffnung 9 abgehoben werden und so für eine im Arbeitsraum 10 befindliche Flüssigkeit den Weg zum Auslaßbereich 12 und der Leitung 17 freigeben. Die Ablauföffnung 9 ist im Ventilsitz 8 als Bohrung ausgeführt, die in den Auslaßbereich 12 mit einem größeren Durchmesser als dem Durchmesser der Bohrung übergeht. Im Arbeitsraum befindet sich eine gasgefüllte Membrandose 7, die rotationssymmetrisch um den Ventilsitz und den die Ablauföffnung 9 bedeckenden Teil der Ventilplatte herum angeordnet ist. Die Membrandose ist hierbei mittels einer Verstemmung 13 des Arbeitsraumteils 18 des Ventilkörpers arretiert. Eine zwischen dem Spulenteil 3 des Ventilkörpers und dem Arbeitsraumteil 18 angeordnete Dichtung 14 schließt die Magnetspule 4 flüssigkeitsdicht vom Rest der Ventilanordnung ab.

Die beschriebene Ventilanordnung eignet sich insbesondere zur Dosierung wäßriger Lösungen, die Gefahr laufen, bei niedrigen Betriebstemperaturen in den Leitungen beziehungsweise im Dosierventil zu gefrieren. Falls im Zulauf beziehungsweise im Arbeitsraum diese wäßrige Lösung, beispielsweise eine Harnstoff-Wasser-Lösung, gefrieren sollte, wird die gasgefüllte Membrandose so weit zusammengedrückt, dass hinreichend Volumen für die wäßrige Lösung beziehungsweise deren feste Phase zur Verfügung steht. Die Membrandose ist dabei so ausgelegt, dass die Flüssigkeitsdrücke, die sich in der Größenordnung von wenigen Bar, beispielsweise 3 Bar, bewegen, keine Deformation der Membrandose verursachen. Erst im Falle eines Gefrierens der wäßrigen Lösung entstehen wesentlich höhere Drücke, beispielsweise in der Größenordnung von 1000 Bar, die die Membrandose zusammendrücken, so dass ein vergrößertes Arbeitsraumvolumen für die gefrorene wäßrige Lösung zur Verfügung steht. Beim Auftauen der Flüssigkeit bildet sich die Verformung der Membrandose entsprechend des sich verringernden Druckes zurück, bis schließlich wieder der Ausgangszustand hergestellt ist und die Membrandose zur Überdrucksicherung im Falle eines erneuten Gefrierens bereitsteht. Falls im Auslaßbereich 12 beziehungsweise in der Leitung 17 die wäßrige gefrieren sollte, ist ebenfalls für einen Ausgleichsmechanismus gesorgt. Der sich durch die Volumenausdehnung des entstehenden Eises ausbildende Eisdruck drückt den Ventilkörper gegen die federnde Klemmscheibe 15, die etwas nachgibt und den Ventilkörper axial in Richtung Klemmscheibe bewegen läßt. Dadurch vergrößert sich das für die Flüssigkeit zur Verfügung stehende Volumen im Auslaßbereich 12. Die Federkraft der Klemmscheibe ist gerade so dimensioniert, dass einerseits durch die Verschiebung des Ventilkörpers ein hinreichender Druckabbau gewährleistet ist, so dass der Eisdruck keine Schäden an Leitungen und an der Ventilanordnung verursachen kann, und dass andererseits der Ventilkörper weiterhin, sichergestellt durch den Elastomerdichtring 16, verschlußdicht an der Leitung 17 anliegt. Taut die Flüssigkeit auf, entspannt ebenso wie die Membrandose auch wieder die Klemmscheibe 15, so dass bei erneutem Gefrieren der wäßrigen Lösung der gleiche Ausgleichsmechanismus zur Verfügung steht. Sowohl die federnde Membrandose als auch die Klemmscheibe 15 begrenzen als den Eisdruck auf ein nicht schädigendes Maß, d. h. die Verformungen sind reversibel und beschränken sich auf die extra hierfür vorgesehenen Elemente, eben die Klemmscheibe 15 und die Membrandose 7.

Figur 2 zeigt ein Magnetventil, das zur Gänze durch eine zentrale, im Durchmesser mehrfach abgestufte Bohrung 22 durchströmt wird. Im Gehäuse 21 des Magnetventils ist eine Magnetspule 35 integriert, mit der eine gegen die Druckkraft der Feder 34 gerichtete Kraft auf die Ventilplatte 66 ausgeübt werden kann, um das in der elastisch gelagerten Düsenplatte 31 integrierte Düsenloch 99 für eine sich in der Bohrung 22 befindliche Flüssigkeit freizugeben. Die Düsenplatte 31 ist mittels eines zwischen dem Gehäuse 21 und der Düsenplatte 31 eingespannten Federtellers 32 fixiert. Eine O-Ringdichtung 33 dichtet die Düsenplatte gegen das Gehäuse ab. Ein Teil der Bohrung 22 ist mit einem elastischen kompressiblen Schlauch 28 ausgekleidet. Dieser Schlauch besteht aus Moosgummi oder geschlossenzelligem, geschäumten Thermoplast, der im vorgepreßten Zustand eingebaut wird und nach seiner Expansion an der Wand 29 der Bohrung 22 festsitzt. Des weiteren ist in der Bohrung 22 ein längs- und querelastisches Formrohrteil 23 integriert, so dass zwischen dem Formrohrteil und der Gehäusewand 25 ein luftgefülltes Ausgleichsvolumen 26 zur Verfügung steht. Eine eingepreßte Scheibe 27 arretiert das Formrohrteil axial, und O-Ringdichtungen 24 stellen sicher, dass keine Flüssigkeit in das Ausgleichsvolumen 26 eindringen kann.

Gefriert eine wäßrige Lösung in der Bohrung 22 des Magnetventils, so stehen drei verschiedene Mechanismen zur Bereitstellung eines Ausgleichsvolumens zur Verfügung. Das elastische Formrohrteil 23 kann das Ausgleichsvolumen 26 dazu nutzen, bei sich aufbauendem Eisdruck in der Bohrung ein vergrößertes Volumen für die Flüssigkeit bereitzustellen. Ebenso trägt der kompressible Schlauch zur Kompensation einer Volumensvergrößerung in Folge einer Eisbildung bei. Ebenso wie das Formrohrteil und der kompressible Schlauch ist auch der Federteller 32 so ausgelegt, dass er nur bei Eisdrücken merklich nachgibt, um durch eine dadurch resultierende Verschiebung der Düsenplatte 31 eine Beschädigung des Magnetventils zu verhindern. Bei normalen Betriebsdrücken, die sich in der Größenordnung von wenigen Bar bewegen, verharren das Formrohrteil, der Schlauch 28 sowie die Düsenplatte 31 im Wesentlichen im Ausgangszustand. Auch hier sind die Elemente so ausgelegt, dass bei Eisdruck entstehende Verformungen der genannten Elemente sich nach Auftauen der Flüssigkeit wieder vollständig zurückbilden.

## Patentansprüche

1. Ventilanordnung zum Dosieren einer Flüssigkeit, insbesondere zum Dosieren einer Harnstoff Wasser-Lösung zur Nachbehandlung von Abgasen aus Brennkraftmaschinen, mit einem einen Arbeitsraum (10) aufweisenden Ventilkörper (3, 18, 19), wobei in dem Arbeitsraum (10) eine Ventilplatte (6) beweglich gelagert ist zum Öffnen und Verschließen einer Ablauföffnung (9) des Arbeitsraums, **dadurch gekennzeichnet, dass** der Ventilkörper (3, 18, 19) mittels eines Ventilhalters (2) derart beweglich gelagert und mit einer Leitung (17) verbunden ist, so dass der Ventilkörper (3, 18, 19) im Falle eines Gefrierens von in der Leitung (17) befindlicher Flüssigkeit eine Ausgleichsbewegung zur Vergrösserung des Leitungsvolumens durchführen kann, wobei zwischen der Leitung (17) und dem Ventilkörper (3, 18, 19) ein Dichtring, insbesondere ein Elastomerdichtring (16), angeordnet ist, so dass sowohl oberhalb der Gefriertemperatur der Flüssigkeit als auch im Falle einer (3, 18, 19) Ausgleichsbewegung ein flüssigkeitsdichtes Anliegen des Ventilkörpers (3, 18, 19) an der Leitung (17) gewährleistet ist.

2. Ventilanordnung nach Anspruch 1, **dadurch gekennzeichnet, dass** ein am Ventilhalter (2) befestigtes Federelement (15) den Ventilkörper (3,18,19) zur Leitung (17) zurückführt, sobald ein Schmelzen der gefrorenen Flüssigkeit in der Leitung (17) einsetzt.

3. Ventilanordnung nach Anspruch 2, **dadurch gekennzeichnet, dass** das Federelement (15) eine federnde Klemmscheibe (15) ist.

4. Ventilanordnung nach einem der Ansprüche 2 oder 3, **dadurch gekennzeichnet, dass** der Ventilkörper (3, 18, 19) in einer Öffnung des Ventilhalters (2) eingebracht und auf der der Ablauföffnung (9) gegenüberliegenden Seite des Ventilkörpers (3, 18, 19) mit dem Federelement (15) arretiert ist, so dass die Ausgleichsbewegung in axialer Richtung erfolgen kann.

5. Ventilanordnung nach Anspruch 4, **dadurch gekennzeichnet, dass** ein lateraler Zulauf (11) zum Arbeitsraum (10) im Ventilhalter (2) integriert ist.

6. Ventilanordnung nach einem der vorhergehenden Ansprüche, **dadurch gekennzeichnet, dass** der Arbeitsraum (10) mindestens ein kompressibles Element (7) enthält, so dass sich das Volumen des Arbeitsraums (10) verändern kann, falls die darin enthaltene Flüssigkeit einen Phasenübergang vollzieht.

7. Ventilanordnung nach Anspruch 6, **dadurch gekennzeichnet, dass** das kompressible Element (7) eine insbesondere gasgefüllte Membrandose ist.

## Claims

1. Valve arrangement for metering a liquid, especially for metering a urea-water solution for the aftertreatment of exhaust gases from internal combustion engines, with a valve body (3, 18, 19) having a working space (10), a valve plate (6) being movably mounted in the working space (10) for opening and closing an outlet opening (9) of the working space, **characterized in that** the valve body (3, 18, 19) is movably mounted by means of a valve holder (2) and is connected to a line (17) in such a way that, in the event of freezing of liquid located in the line (17), the valve body (3, 18, 19) can carry out a compensating movement to increase the volume of the line, a sealing ring, especially an elastomer sealing ring (16), being arranged between the line (17) and the valve body (3, 18, 19), so that both above the freezing temperature of the liquid and in the event of a compensating movement it is ensured that the valve body (3, 18, 19) lies against the line (17) in a liquid-tight manner.

2. Valve arrangement according to Claim 1, **characterized in that** a spring element (15) fastened on the valve holder (2) returns the valve body (3, 18, 19) to the line (17) as soon as melting of the frozen liquid in the line (17) commences.

3. Valve arrangement according to Claim 2, **characterized in that** the spring element (15) is a resilient clamping disc (15).

4. Valve arrangement according to either of Claims 2 and 3, **characterized in that** the valve body (3, 18, 19) is fitted in an opening in the valve holder (2) and is arrested by the spring element (15) on the side of the valve body (3, 18, 19) opposite from the outlet opening (9), so that the compensating movement can take place in an axial direction.

5. Valve arrangement according to Claim 4, **characterized in that** a lateral inflow (11) to the working space (10) is integrated in the valve holder (2).

6. Valve arrangement according to one of the preceding claims, **characterized in that** the working space (10) includes at least one compressible element (7), so that the volume of the working space (10) can change if the liquid contained in it undergoes a phase transition.

7. Valve arrangement according to Claim 6, **characterized in that** the compressible element (7) is a diaphragm cell, especially a gas-filled diaphragm cell.

## Revendications

1. Dispositif de soupape pour doser un liquide, notamment pour doser une solution urée-eau, pour le post-traitement des gaz d'échappement de moteurs à combustion, comprenant un corps de soupape (3, 18, 19) ayant une chambre active (10),
une plaque de soupape (6) montée mobile dans la chambre active (10) pour ouvrir et fermer un orifice de sortie (9) de la chambre active,
**caractérisé en ce que**
le corps de soupape (3, 18, 19) est mobile par un support de soupape (2) et il est relié à une conduite (19) pour que le corps de soupape (3, 18, 19), en cas de gel du liquide dans la conduite (17), puisse effectuer un mouvement de compensation pour augmenter le volume de la conduite,
un joint d'étanchéité, notamment un joint d'étanchéité en élastomère (16) étant installé entre la conduite (17) et le corps de soupape (3, 18, 19) pour assurer une application étanche du corps de soupape (3, 18, 19) contre la conduite (17) à la fois au-dessus de la température de gel du liquide et aussi en cas de mouvement de compensation.

2. Dispositif de soupape selon la revendication 1,
**caractérisé par**
un élément de ressort (15) fixé au support de soupape (2) pour rappeler le corps de soupape (3, 18, 19) contre la conduite (17) dès que le liquide gelé commence à fondre dans la conduite (17).

3. Dispositif de soupape selon la revendication 2,
**caractérisé en ce que**
l'élément de ressort (15) est un disque élastique (15) encastré.

4. Dispositif de soupape selon l'une des revendications 2 ou 3,
**caractérisé en ce que**
le corps de soupape (3, 18, 19) est logé dans une ouverture du support de soupape (2) et sur le côté du corps de soupape (3, 18, 19), à l'opposé de l'ouverture de sortie (9), il est bloqué par l'élément de ressort (15) pour permettre un mouvement de compensation dans la direction axiale.

5. Dispositif de soupape selon la revendication 4,
**caractérisé en ce qu'**
une arrivée latérale (11) dans la chambre active (10) est intégrée dans le support de soupape (2).

6. Dispositif de soupape selon l'une quelconque des revendications précédentes,
**caractérisé en ce que**
la chambre active (10) contient au moins un élément compressible (7) pour que le volume de la chambre active puisse varier lorsque le liquide qu'elle contient subit une transition de phase.

7. Dispositif de soupape selon la revendications 6,
**caractérisé en ce que**
l'élément compressible (7) est une poche à membrane notamment chargée de gaz.
